# EUROPEAN PATENT SPECIFICATION

(11) **EP 3 726 063 B1**
(45) Date of publication and mention of the grant of the patent: **24.11.2021**
(21) Application number: 19169231.8
(22) Date of filing: 15.04.2019
(51) Int. Cl.: F04D 29/58, H02K 9/19, H02K 5/12, F04D 17/10, F04D 25/06

(54) **FLUID-COOLED ELECTRICALLY DRIVEN COMPRESSOR AND STATOR HOUSING THEREFOR**
FLÜSSIGKEITSGEKÜHLTER ELEKTRISCH ANGETRIEBENER VERDICHTER UND STATORGEHÄUSE DAFÜR
COMPRESSEUR À COMMANDE ÉLECTRIQUE ET À REFROIDISSEMENT PAR FLUIDE ET LOGEMENT DE STATOR CORRESPONDANT

(43) Date of publication of application: 21.10.2020
(73) Proprietor: BorgWarner Inc., Auburn Hills, MI 48326 (US)
(72) Inventor: URBANCZYK, Olgierd, 35-312 Rzeszow (PL)
(74) Representative: Röthinger, Rainer

(56) References cited:
- EP-A1- 0 878 897
- DE-A1-102014 204 816
- DE-A1-102015 006 348
- JP-A- H08 281 317
- US-A- 3 060 335
- US-A1- 2010 150 739
- US-A1- 2015 308 456
- US-A1- 2018 174 098

## Description

### Technical Field

The present disclosure relates to a compressor for an internal combustion engine. More particularly, the present disclosure relates to a stator housing for a fluid-cooled electrically driven compressor and to a fluid-cooled electrically driven compressor comprising this stator housing.

### Background

Compressors deliver compressed air to an intake of an internal combustion engine, allowing more fuel to be combusted. As a result, a power density of the engine is increased without significantly increasing engine weight. Compressors thus permit the use of smaller engines that develop the same amount of power as larger, normally aspirated engines. Using a smaller engine in a vehicle has the desired effect of decreasing the vehicle mass, increasing performance and reducing fuel consumption. Moreover, the use of compressors leads to an improved combustion and, therefore, to reduced emissions.

There exist different types of compressors. Exhaust gas turbochargers include a turbine housing having an inlet passage connected to an exhaust manifold of the engine, a compressor housing having an outlet passage connected to an intake manifold of the engine, and a bearing housing interconnecting the turbine housing and the compressor housing. An exhaust gas flow from the exhaust manifold rotatably drives a turbine wheel in the turbine housing. The turbine wheel is connected via a rotor shaft rotatably supported in the bearing housing to a compressor wheel in the compressor housing. Rotation of the turbine wheel by the exhaust gas flow thus causes rotation of the compressor wheel. The rotating compressor wheel draws ambient air via a so-called inducer into the compressor housing and compresses the air. Downstream of the compressor wheel the compressed air enters a diffusor channel from which the compressed air is guided via a compressor cover to the intake manifold.

Electrically driven compressors, sometimes also called eBoosters, present an alternative to exhaust gas turbochargers. In electrically driven compressors, the rotor shaft, on which the compressor wheel is arranged, is driven by an electric motor, and not by the exhaust gas flow. For this purpose, a rotor of the electric motor is rotatably fixed to the rotor shaft and a stator of the electric motor circumferentially encloses the rotor. The stator is accommodated in a stator housing that is fixedly attached to the compressor housing.

Electrically driven compressors tend to significantly heat up during operation, especially at high loads. It has therefore been proposed to circulate a cooling fluid through the stator housing so as to prevent thermal damage. A fluid-cooled electrically driven compressor of this type is known from WO 2017/192336 A. The stator housing of this compressor comprises a fluid chamber delimited by a radially outer wall and a radially inner wall relative to a longitudinal axis of the stator housing. The fluid chamber has an inlet for the cooling fluid and an outlet. Furthermore, DE 10 2015 006348 A1 and DE 10 2014 204 816 A1 each disclose cooling fins arranged in a cooling jacket for cooling an electrical machine.

### Summary

There is a need for a fluid-cooled electrically driven compressor with improved cooling efficiency. There also is a need for a stator housing for such a compressor.

A stator housing for a fluid-cooled electrically driven compressor according to claim 1 is presented.

The shortest path may extend in a circumferential direction of the longitudinal axis when the inlet and outlet are spaced apart in the circumferential direction. The shortest path may extend in an axial direction of the longitudinal axis when the inlet and outlet are spaced apart in the longitudinal direction. Moreover, the inlet and outlet may also be spaced apart in both the longitudinal and the circumferential direction of the longitudinal axis, so that the shortest path may have a helical extension (of typically less than 360°).

Multiple fluid flow deflectors are located on each of the radially outer wall and the radially inner wall. An individual fluid flow deflector may extend from the inner wall to the outer wall. Alternatively, an individual fluid flow deflector may project from only one of the radially inner wall and the radially outer wall towards an interior of the chamber. One or more of the fluid flow deflectors project from the radially outer wall and one or more of the fluid flow deflectors project from the radially inner wall. An individual fluid flow deflector has a maximum height that projects over up to 50% or over up to 30% of a distance between the radially outer wall and the radially inner wall in the region of that fluid flow deflector. An individual fluid flow deflector may have a maximum height between 0,2 mm and 5 mm (e.g., between 0,5 mm and 3 mm), and a radial distance between the radially inner wall and the radially outer wall in the region of that fluid flow deflector may be larger than the maximum height.

The multiple fluid flow deflectors may have an increasing height in a fluid flow direction (e.g., along the shortest path) from the inlet to the outlet. As an example, the multiple fluid flow deflectors may define an inclined surface over its region of increasing height. This inclined surface may be planar or curved, or may include both curved and planar surface regions. In the fluid flow direction the inclined surface may end at a step at which the height of the fluid flow deflector decreases again. The fluid flow deflectors may thus have a sawtooth-like profile.

A velocity of the cooling fluid flow may be interpreted as a vector. The multiple fluid flow deflectors are configured to impart a velocity vector component on at least a portion of the cooling fluid flow. As an example, the imparted velocity vector component may extend along (i.e., parallel to) the longitudinal axis. The imparted velocity vector component generally has a direction different from a direction defined by the shortest path between the inlet and the outlet. This different direction may deviate from a direction of the shortest path in a region of an individual fluid flow deflector by up to 60° (e.g., by 15° to 45°).

The multiple fluid flow deflectors may have a leading surface relative to a fluid flow direction. As mentioned above, the leading surface may be an inclined surface. The leading surface may have a leading edge that extends obliquely relative to at least one of the longitudinal axis and the circumferential direction of the longitudinal axis. As an example, the leading edge may extend non-parallel to the longitudinal axis and not in a plane that extends perpendicular to the longitudinal axis. In some variants, the leading edge of a particular fluid flow deflector is located at a transition between one of the radially inner wall and the radially outer wall and the particular fluid flow deflector.

Additionally, or in the alternative, the multiple fluid flow deflectors may have a trailing edge that extends parallel to the longitudinal axis. An angle ϕ between the leading edge and the trailing edge may satisfy the following condition: 0° < ϕ ≤ 60° (e.g., 15° ≤ ϕ ≤ 45°). A maximum distance along the circumferential direction between the leading edge and the trailing edge may range between 2 mm and 20 mm (e.g., between 5 mm and 10 mm). In some variants, the trailing edge is configured as a step. The step may have a decreasing height. The step may be designed so as to impart turbulence on at least a portion of the cooling fluid flow that passes the fluid flow deflector.

Multiple fluid flow deflectors are provided. The multiple fluid flow deflectors are spaced apart in a circumferential direction of the longitudinal axis (e.g., at an equidistant spacing in the circumferential direction). Each of the radially inner wall and the radially outer wall is provided with multiple fluid flow deflectors projecting therefrom. A fluid flow deflector on the radially outer wall may be located in a circumferential direction between two adjacent fluid flow deflectors on the radially inner wall. Additionally, or in the alternative, a fluid flow deflector on the radially inner wall may be located in a circumferential direction between two adjacent fluid flow deflectors on the radially outer wall.

A radial distance between the radially inner wall and the radially outer wall may continuously decrease along the longitudinal axis. In such an implementation, at least one of the inlet and the outlet may be located in a region of the fluid chamber where the radial distance between the radially inner wall and the radially outer wall is larger than an average radial distance between the radially inner wall and the radially outer wall along the longitudinal axis.

An axial distance between the inlet and the outlet along the longitudinal axis may be less than 25% of a length of the stator housing along the longitudinal axis. In particular, the axial distance between the inlet and the outlet along the longitudinal axis may substantially be zero.

The outlet may be spaced apart from the inlet in a circumferential direction of the longitudinal axis. The outlet and the inlet may be provided at opposite ends of the chamber in the circumferential direction. In some variants, the outlet may be spaced apart from the inlet by more than 180° or more than 270° in a circumferential flow direction of the cooling fluid relative to the longitudinal axis.

The fluid chamber may extend in a circumferential direction of the longitudinal axis over more than 60° or more than 90°. In particular, the fluid chamber may extend in a circumferential direction of the longitudinal axis over more than 180° or more than 270°. The chamber may extend in a circumferential direction of the longitudinal axis over less than 360° (e.g., over less than 350°). The remaining more than 0° or more than 10°, respectively, may be defined by a fluid chamber wall longitudinally extending along the longitudinal axis and radially extending from the radially inner wall to the radially outer wall. The wall may longitudinally extend over the entire length of the fluid chamber.

At least one of the inlet and the outlet is defined by a bore. The respective bore may penetrate the radially outer wall of the fluid chamber.

The stator housing is configured to comprise the stator of the electric motor, wherein the stator is received in the stator opening. In some variants, the stator may define the radially inner wall of the cooling fluid chamber. As an example, the stator may have a substantially cylindrical outer wall that defines the radially inner wall of the cooling fluid chamber. One or more fluid flow deflectors may extend from the substantially cylindrical outer wall of the stator (that forms the radially inner wall of the fluid chamber) towards the radially outer wall of the fluid chamber. Both the radially outer wall and the radially inner wall may be integral components of the stator housing.

Also provided is a fluid-cooled electrically driven compressor comprising the stator housing presented herein.

### Brief Description of the Drawings

Additional aspects and advantages of the present disclosure will be readily appreciated by reference to the following detailed description when considered in connection with the accompanying drawings, wherein:
- Fig. 1: is a first cross-sectional view of a fluid fluid-cooled electrically driven compressor according to one embodiment of the present disclosure, wherein the cross-section is taken along a longitudinal axis of the compressor;
- Fig. 2: is a second cross-sectional view of the compressor of Fig. 1, wherein the cross-section is taken perpendicular to the longitudinal axis of the compressor;
- Fig. 3: is a schematic planar view of fluid flow deflectors and illustrates fluid flow deflection away from a shortest path along the longitudinal axis;
- Fig. 4: is a schematic cross-sectional view of a fluid chamber and illustrates generation of turbulences at trailing ends of the fluid flow deflectors; and
- Fig. 5: is a table comparing simulated heat flow-related parameters for a fluid chamber without and with fluid flow deflectors.

### Detailed Description

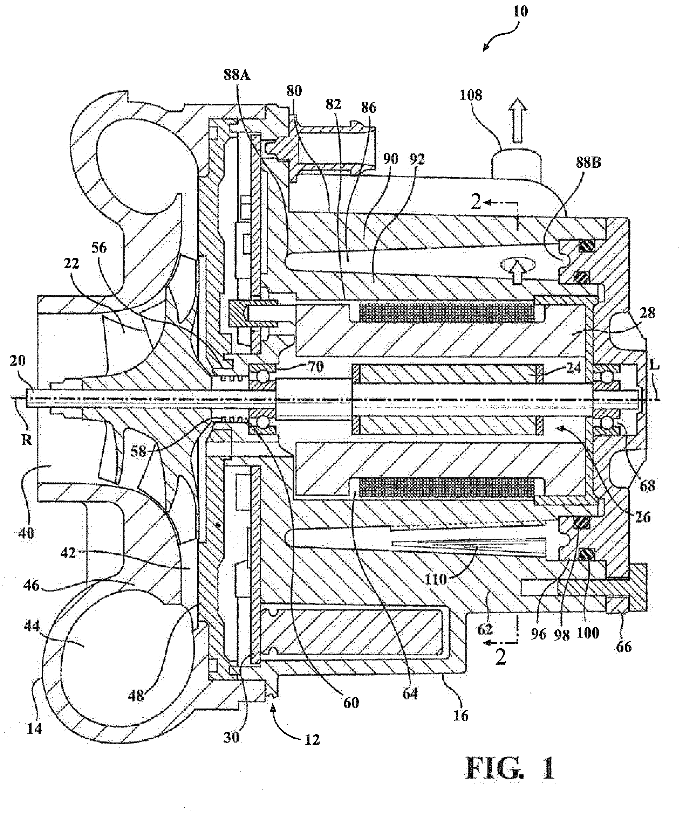

Fig. 1 illustrates an embodiment of a fluid-cooled electrically driven compressor 10 for an internal combustion engine. The compressor 10 includes a housing assembly 12 consisting of a compressor housing 14 and a stator housing 16 that are connected to each other.

The housing assembly 12 rotatably supports a rotor shaft 20 having an axis of rotation R. A compressor wheel 22 with a plurality of blades is mounted on one end of the shaft 20 that is accommodated in the compressor housing 14. A rotor 24 of an electric motor 26 is mounted on an opposite end of the shaft 20 in relation to the compressor wheel 22. The rotor 24 is accommodated together with a stator 28 of the electric motor 26 in the stator housing 16. During operation of the electric motor 26, the rotor 24 and the shaft 20 with the compressor wheel 22 rotate relative to the stator 28, as is known in the art.

The compressor housing 14 includes an inlet passage 40. This inlet passage 40 is also referred to as inducer. Upon rotation of the compressor wheel 22, ambient air is drawn into the compressor housing 14 through the inlet passage 40 and compressed by the compressor wheel 22. Downstream of the compressor wheel 22 the compressed air enters a diffusor channel 42 from which the compressed air is guided via an outlet passage 44 in the form of a volute to an intake manifold (not shown) of the engine.

The diffusor channel 42 is defined between a compressor housing body 46 and a backplate 48 of the compressor housing 14. The backplate 48 is substantially disk-shaped and has a diameter that is substantially larger than a diameter of the compressor wheel 22 so as to delimit the diffusor channel 42 that extends in a radial direction away from the compressor wheel 22.

The backplate 48 comprises a central through-opening 56 that is seated on a tubular protrusion 58 of the stator housing 14. The rotor shaft 20 extends through this tubular protrusion 58. A sleeve 60, also called flinger sleeve, is seated on the rotor shaft 20 so as to rotate together with the rotor shaft 20.

The stator housing 16 has a longitudinal axis L that extends coaxial with the axis of rotation R. The stator housing 16 comprises a stator housing body 62 with a substantially cylindrical opening 64 extending along the longitudinal axis L and accommodating the stator 28. A printed circuit board 30 with electrical components that electrically contact the stator 28 is mounted to the stator housing body 62 at its end facing the compressor housing 14. On its end opposite the compressor housing 14, the stator opening 64 is closed by a cover 66. In the present embodiment, the cover 66 is attached to the stator housing body 62 via a screw connection. A first rotor bearing 68 for the rotor shaft 20 is provided in the cover 66 and a second rotor bearing 70 is provided in the stator housing body 62 at its end opposite to the cover 66. The two rotor bearings 68, 70 are configured as ball bearings.

The stator housing body 62 has a substantially hollow cylindrical shape defined by an outer wall 80 and an inner wall 82. The inner wall 82 delimits the stator opening 64. A fluid chamber 86 in the stator housing body 62 is located between the outer wall 80 and the inner wall 82. The fluid chamber 86 is part of a cooling fluid circuit that partially extends to an outside of the housing assembly 12. In this cooling circuit, the fluid chamber 86 acts as a heat exchanger for transporting heat (generated, for example, by the stator 28 and the control components on the printed circuit board 30) to the outside of the housing assembly 12. In one variant, water is used as a cooling fluid, but other cooling fluids may be used as well.

The fluid chamber 86 extends along the longitudinal axis L from a first end 88A facing the compressor housing 14 to a second end adjacent the cover 66. The fluid chamber 86 extends in a circumferential direction of the longitudinal axis L around the stator opening 64. In a radial direction of the longitudinal axis L, the fluid chamber 86 is delimited by a radially outer wall 90 and a radially inner wall 92. Each of the radially outer wall 90 and the radially inner wall 92 has a face adjacent the fluid chamber 86 that is inclined relative to the longitudinal axis L such that a radial distance between the radially inner wall 92 and the radially outer wall 90 continuously increases along the longitudinal axis L from the end 88A of the stator housing body 62 next to the compressor housing 14 to the end 88B of the stator housing body 62 next to the cover 66. As such, each of the radially outer wall 90 and the radially inner wall 92 defines a substantially conical surface respectively having an increasing and decreasing diameter from an end of the stator housing body 62 next to the compressor housing 14 to an end of the stator housing body 62 next to the cover 66. In other embodiments, at least one of the radially outer wall 90 and the radially inner wall 92 may define a cylindrical shape. Moreover, in such or other embodiments, the radial distance between the radially inner wall 92 and the radially outer wall 90 may substantially be constant along the longitudinal axis L.

The stator housing body 62 is a cast metal part. The fluid chamber 86 will be defined during the casting process by an axially movable slider or by a core in the mold. The slider is used in a die-casting process. As shown in Fig. 1, the end 88A of the fluid chamber 86 facing the compressor housing 14 is concavely shaped towards an interior of the fluid chamber 86 for ease of manufacturing.

At its end 88B facing the cover 66, the fluid chamber 86 is delimited by a ringshaped protrusion 96 of the cover 66. The protrusion 96 axially extends into the fluid chamber 86. A radially inner sealing ring 98 and a radially outer sealing ring 100 are arranged between the protrusion 96 on the one hand and, on the other hand, the radially inner wall 92 and the radially outer wall 90, respectively.

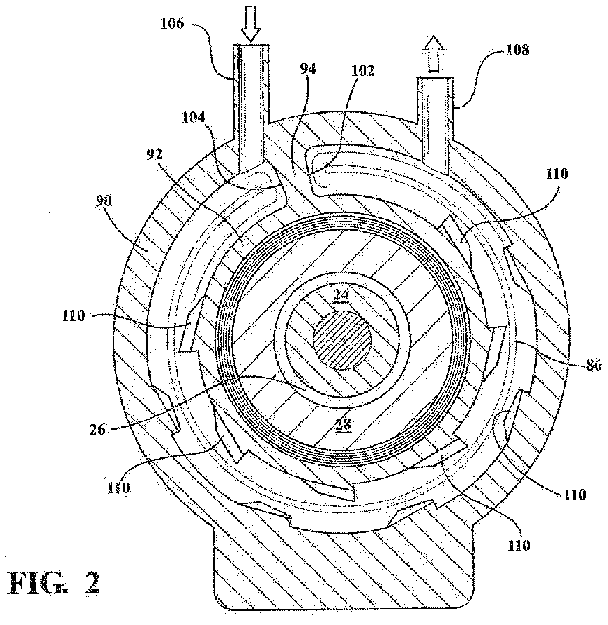

It is to be noted that the fluid chamber 86 has a circumferential extension of less than 360° relative to the longitudinal axis L. As illustrated in the cross-sectional view perpendicular to the longitudinal axis L of Fig. 2, the fluid chamber 86 is further delimited by a longitudinal wall 94 in the stator housing body 62. This longitudinal wall 94 axially extends along the longitudinal axis L over the entire length of the fluid chamber 86 and, radially, from the radially inner wall 92 to the radially outer wall 90.

As shown in Fig. 2, the longitudinal wall 94 of the stator housing body 62 defines two ends 102, 104 of the fluid chamber 86 in the circumferential direction of the longitudinal axis L. The longitudinal wall 94 extends in the circumferential direction over approximately 10°, but could also extend over a larger (e.g., up to 90°) or smaller (e.g., less than 5°) angular range. The minimal circumferential extension of the longitudinal wall 94 and, thus, its minimal thickness will typically be defined by the casting process chosen for manufacturing the stator housing body 62.

As further shown in Fig. 2, the fluid chamber 86 comprises an inlet 106 and an outlet 108. In the cross-sectional view illustrated in Fig. 1, only the outlet 108 is shown. Each of the inlet 106 and the outlet 108 is defined as a bore that penetrates the radially outer wall 90 of the fluid chamber 86. The inlet 106 is spaced apart from the outlet 108 in a circumferential direction relative to the longitudinal axis L. In an axial direction, the inlet 106 and the outlet 108 have the same axial position (i.e., a distance of zero) relative to the longitudinal axis L.

The inlet 106 and the outlet 108 are both located adjacent to the protrusion 96 of the cover 66. In other words, the inlet 106 and the outlet 108 are both located in a region of the fluid chamber 86 where the radial distance between the radially inner wall 92 and the radially outer wall 90 is larger than an average radial distance between the radially inner wall 92 and the radially outer wall 90 along the longitudinal axis L.

As becomes apparent from Fig. 2, multiple fluid flow deflectors 110 are arranged in the fluid chamber 86 in a region between the radially inner wall 92 and the radially outer wall 90. The fluid flow deflectors 110 are generally configured as structures respectively protruding from a bottom of the radially inner wall 92 and a bottom of the radially outer wall 90 into the fluid chamber 86. Each fluid flow deflector 110 has an axial extension along the longitudinal axis L. In typical realizations, each fluid flow deflector 110 extends over at least 50% (e.g., more than 75% and up to 100%) of the axial length of the fluid chamber 86. In an axial direction, the fluid flow deflectors 110 are spaced apart from both the end 88A of the fluid chamber 86 facing the compressor housing 14 and the end 88B of the fluid chamber 86 adjacent to the cover 66.

Each fluid flow deflector 110 is configured and arranged to deflect a portion of a cooling fluid flow away from a shortest path between the inlet 106 and the outlet 108. In the embodiment depicted in the drawings, that shortest path extends in a circumferential direction from the inlet 106 to the outlet 108. Since the fluid chamber 86 is delimited in the circumferential direction by the longitudinal wall 94 (see also reference numerals 102 and 104 in Fig. 2), the shortest path extends circumferentially over approximately 300° in a fluid flow direction from the inlet 106 to the outlet 108. It will be appreciated that in other embodiments, the shortest path may at least partially extend in an axial direction of the longitudinal axis L (i.e., when the inlet 106 and outlet 108 are solely, or additionally, spaced apart in the longitudinal direction).

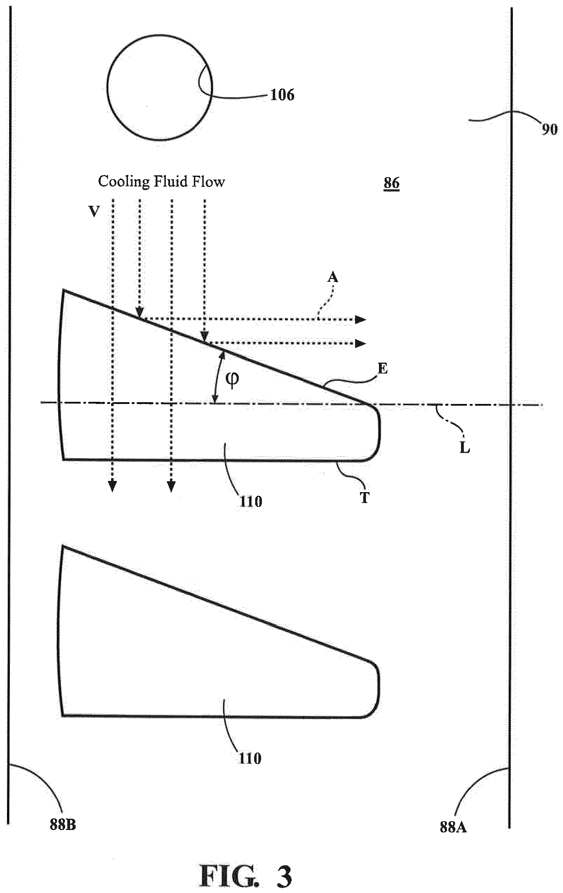

In order to deflect the cooling fluid flow away from the shortest path between the inlet 106 and the outlet 108 (i.e., in the present embodiment away from the circumferential direction), the fluid flow deflectors 110 direct the cooling fluid flow in an axial direction of the longitudinal axis L. This means that the fluid flow deflectors 110 impart a velocity vector component on the cooling fluid flow that extends axially, as will now be explained with reference to Fig. 3. Fig. 3 schematically illustrates a winding off of the arcuate radially outer wall 90 in an imaginary plane.

A velocity of the cooling fluid flow in the circumferential direction of the fluid chamber 86 downstream of the inlet 106 and upstream of one of the fluid flow deflectors 110 may be represented by a vector V, as shown in Fig. 3. Fig. 3 also schematically illustrates two of the fluid flow deflectors 110 of Figs. 1 and 2. Each fluid flow deflector 110 has a leading edge E and a trailing edge T. The leading edge E is part of a leading surface that is configured to impart an axial velocity vector component A along the longitudinal axis L on a portion of the circumferentially directed cooling fluid flow. The axial velocity vector component A thus is directed perpendicular to the vector V and towards the end 88A of the fluid chamber 86 that faces the compressor housing 14 (where the fluid chamber 86 has its minimal radial extension). Due to the limited height of each fluid flow deflector 110, not the entire cooling fluid flow will be re-directed from the circumferential direction, but only a portion thereof. This is also illustrated in Fig. 3 by two vectors V that pass the fluid flow deflector 110 without being deflected.

The leading edge E extends obliquely, or diagonally, relative to both the longitudinal axis L and the circumferential direction of the longitudinal axis L. This geometric relationship is illustrated in Fig. 3 by a projection of the longitudinal axis L on the radially outer wall 90. As shown in Fig. 3, the leading edge E of the fluid flow deflector 110 extends at an angle ϕ (i.e., diagonally) relative to the projection of the longitudinal axis L. In general, ϕ can be selected to be greater than 0° (e.g., greater than 15°) and smaller than or equal to 60° (e.g., smaller than or equal to 45°). In the embodiment illustrated in Fig. 3, ϕ is selected to equal approximately 20°.

The trailing edge T of each fluid flow deflector 110 extends parallel to the longitudinal axis L. Therefore, the trailing edge T is also arranged at the angle ϕ relative to the leading edge E. A maximum distance along the circumferential direction between the leading edge E and the trailing edge T may range between 2 mm and 20 mm (e.g., between 5 mm and 10 mm).

The cooling fluid flow will thus partially be deflected by each fluid flow deflector 110 from the shortest (i.e., circumferential) path between the inlet 106 to the outlet 108 and will at least partially be deflected in an axial direction towards the end of the fluid chamber 86 adjacent to the compressor housing 14. As a result, the cooling fluid flows through and absorbs heat in the entire fluid chamber 86. Therefore, the cooling fluid flow can transport absorbed heat away not just from the end of the stator housing 16 at which the inlet 106 and outlet 108 are located (i.e., adjacent to the cover 66), but also from the end of the fluid chamber 86 adjacent to the compressor housing 14. Consequently, the cooling efficiency can be increased.

As shown in Figs. 2 and 3, multiple fluid flow deflectors 110 are located on each of the radially inner wall 92 and the radially outer wall 90. In the embodiment illustrated in the drawings, five fluid flow deflectors 110 are located on the radially outer wall 90 and six fluid flow deflectors 110 are located on the radially inner wall 92, although these numbers may be varied. The fluid flow deflectors 110 on a particular one of the walls 90, 92 substantially have the same circumferential distance from each other. The fluid flow deflectors 110 are located on the two walls 90, 92 such that each fluid flow deflector 110 on the radially outer wall 90 is circumferentially positioned between two fluid flow deflectors 110 on the radially inner wall 92, and vice versa (except for the circumferentially outermost fluid flow deflectors 110).

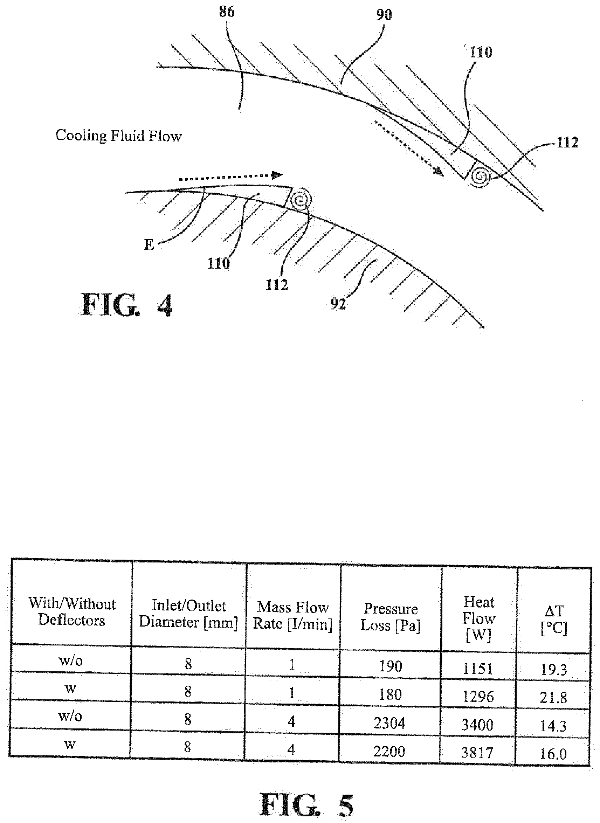

As becomes apparent from Fig. 2, and now with additional reference to Fig. 4, the fluid flow deflectors 110 each have an increasing height in a fluid flow direction (e.g., along the shortest path) from the inlet 106 to the outlet 108.. The fluid flow deflectors 110 each have a maximum height that extends over approximately 10% to 30% of a radial distance between the radially outer wall 90 and the radially inner wall 92 (e.g., over approximately 1 mm to 2 mm).

As illustrated in Fig. 4, the trailing edge T of each fluid flow deflector 110 is configured as a step, leading to a sawtooth-like profile. The step acts as a break-away edge for the (substantially laminar) cooling fluid flow circumferentially along the inclined leading surface that comprises the leading surface E. As a result, turbulence is imparted on the cooling fluid flow at the trailing edge T so that swirls 112 are created in the cooling fluid flow circumferentially behind each trailing edge T. It has been found that such swirls 112 stabilize the cooling fluid flow in the circumferential direction and give rise to a reduced pressure loss between the inlet 106 and the outlet 108.

As a result of the fluid flow deflectors 110 deflecting the cooling fluid flow away from the shortest path between the inlet 106 and the outlet 108, and thus distributing the cooling fluid flows through the entire fluid chamber 86, the cooling fluid in the fluid chamber 86 assumes a more uniform temperature distribution. Consequently, heat is prevented from "accumulating" at the end of the fluid chamber 86 adjacent to the compressor housing 14, and cooling efficiency is increased. This increase in cooling efficiency becomes apparent from the table of Fig. 5.

The table of Fig. 5 provides a comparison of simulated heat flow-related parameters for a fluid chamber 86 as illustrated in Figs. 1 to 4 without and with the fluid flow deflectors 110. To this end, computational fluid dynamics (CFD) simulations using ANSYS AIM have been performed for a diameter of 8 mm for the inlet 106 and the outlet 108 as well as for two different mass flow rates of the cooling fluid. As becomes apparent from the table, the temperature difference ΔT of the cooling fluid between the outlet 108 and the inlet 106 is increased when fluid flow deflectors 110 are provided, which means that the heat flow from the stator housing 16 to the cooling fluid is increased also. Consequently, the cooling efficiency is improved. At the same time, pressure losses between the inlet 106 and the outlet 108 are decreased in the presence of the fluid flow deflectors 110, which is due to turbulences formed at the trailing edges T of the fluid flow deflectors 110 and to the resulting stabilization of the cooling fluid flow as a whole from the inlet 106 to the outlet 108.

The invention has been described here in an illustrative manner, and it is to be understood that modifications and variations are possible in light of the above teachings. It is, therefore, to be understood that the invention may be practiced in other embodiments while still being covered by the claims that follow.

## Claims

1. A stator housing (16) for a fluid-cooled electrically driven compressor (10) of an internal combustion engine, the stator housing (16) having a longitudinal axis (L) and comprising
a stator opening (64) extending along the longitudinal axis (L) and configured to receive a stator (28) of an electric motor (26); and
a fluid chamber (86) having a fluid inlet (106) and a fluid outlet (108) and extending in a circumferential direction of the longitudinal axis (L) around the stator opening (64), wherein the fluid chamber (86) is delimited by a radially outer wall (90) and a radially inner wall (92) relative to the longitudinal axis (L),
wherein
multiple fluid flow deflectors (110) are arranged in a region between the radially outer wall (90) and the radially inner wall (92) and spaced apart in a circumferential direction of the longitudinal axis (L) and configured to deflect at least a portion of a cooling fluid flow away from a shortest path between the inlet (106) and the outlet (108), **characterised in that** one or more of the fluid flow deflectors project from the radially outer wall and one or more of the fluid flow deflectors project from the radially inner wall.

2. The stator housing (16) of claim 1, wherein
the fluid flow deflectors (110) have an increasing height in a fluid flow direction from the inlet (106) to the outlet (108).

3. The stator housing (16) of any of the preceding claims, wherein
the fluid flow deflectors (110) are configured to impart a velocity component (A) on at least a portion of the cooling fluid flow, wherein the velocity component (A) extends along the longitudinal axis (L).

4. The stator housing (16) of any of the preceding claims, wherein
the fluid flow deflectors (110) have a leading surface with a leading edge (E), wherein the leading edge (E) extends obliquely relative to at least one of the longitudinal axis (L) and the circumferential direction of the longitudinal axis (L).

5. The stator housing (16) of any of the preceding claims, wherein
the fluid flow deflectors (110) have a trailing edge (T) that extends parallel to the longitudinal axis (L).

6. The stator housing (16) of claim 5, wherein
the trailing edge (T) is configured as a step.

7. The stator housing (16) of claims 4 and 5 or 4, 5 and 6, wherein
for an angle ϕ between the leading edge (E) and the trailing edge (T) the following condition holds: 0 < ϕ ≤ 60°.

8. The stator housing (16) of claim 1, wherein
for the multiple fluid flow deflectors (110) at least one of the following two conditions holds:
- a fluid flow deflector (110) on the radially outer wall (90) is located in a circumferential direction between two adjacent fluid flow deflectors (110) on the radially inner wall (92); and
- a fluid flow deflector (110) on the radially inner wall (92) is located in a circumferential direction between two adjacent fluid flow deflectors (110) on the radially outer wall (90).

9. The stator housing (16) of any of the preceding claims, wherein
an axial distance between the inlet (106) and the outlet (108) along the longitudinal axis (L) is less than 25% of a length of the stator housing (16) along the longitudinal axis (L).

10. The stator housing (16) of any of the preceding claims, wherein
the outlet (108) is spaced apart from the inlet (106) in a circumferential direction of the longitudinal axis (L).

11. The stator housing (16) of any of the preceding claims, wherein
the fluid chamber (86) extends in a circumferential direction of the longitudinal axis (L) over less than 360°.

12. The stator housing (16) of any of the preceding claims, further comprising
the stator (28), wherein the stator (28) is received in the stator opening (64) and defines the radially inner wall (92) of the cooling fluid chamber (86).

13. A fluid-cooled electrically driven compressor (10) of an internal combustion
engine, the compressor (10) comprising the stator housing (16) of any of the preceding claims.

## Patentansprüche

1. Statorgehäuse (16) für einen flüssigkeitsgekühlten elektrisch angetriebenen Verdichter (10) einer Brennkraftmaschine, wobei das Statorgehäuse (16) eine Längsachse (L) aufweist und umfasst:
eine Statoröffnung (64), die sich entlang der Längsachse (L) erstreckt und ausgebildet ist, um einen Stator (28) eines Elektromotors (26) aufzunehmen; und
eine Flüssigkeitskammer (86), die einen Flüssigkeitseinlass (106) und einen Flüssigkeitsauslass (108) aufweist und sich in einer Umfangsrichtung der Längsachse (L) um die Statoröffnung (64) herum erstreckt, wobei die Flüssigkeitskammer (86) durch eine radial äußere Wand (90) und eine radial innere Wand (92) relativ zu der Längsachse (L) begrenzt ist, wobei
mehrere Flüssigkeitsströmungsablenker (110) in einem Bereich zwischen der radial äußeren Wand (90) und der radial inneren Wand (92) angeordnet und in einer Umfangsrichtung der Längsachse (L) beabstandet sind und ausgebildet sind, um wenigstens einen Teil einer Kühlflüssigkeitsströmung von einem kürzesten Weg zwischen dem Einlass (106) und dem Auslass (108) abzulenken,
**dadurch gekennzeichnet, dass**
einer oder mehrere der Flüssigkeitsströmungsablenker (110) von der radial äußeren Wand (90) vorstehen und einer oder mehrere der Flüssigkeitsströmungsablenker (110) von der radial inneren Wand (92) vorstehen.

2. Statorgehäuse (16) nach Anspruch 1, wobei
die Flüssigkeitsströmungsablenker (110) in einer Flüssigkeitsströmungsrichtung vom Einlass (106) zum Auslass (108) eine zunehmende Höhe aufweisen.

3. Statorgehäuse (16) nach einem der vorhergehenden Ansprüche, wobei
die Flüssigkeitsströmungsablenker (110) ausgebildet sind, um wenigstens einem Teil der Kühlflüssigkeitsströmung eine Geschwindigkeitskomponente (A) zu verleihen, wobei sich die Geschwindigkeitskomponente (A) entlang der Längsachse (L) erstreckt.

4. Statorgehäuse (16) nach einem der vorhergehenden Ansprüche, wobei
die Flüssigkeitsströmungsablenker (110) eine Vorderfläche mit einer Vorderkante (E) aufweisen, wobei sich die Vorderkante (E) schräg in Bezug auf die Längsachse (L) und/oder die Umfangsrichtung der Längsachse (L) erstreckt.

5. Statorgehäuse (16) nach einem der vorhergehenden Ansprüche, wobei
die Flüssigkeitsströmungsablenker (110) eine Hinterkante (T) aufweisen, die sich parallel zur Längsachse (L) erstreckt.

6. Statorgehäuse (16) nach Anspruch 5, wobei
die Hinterkante (T) als Stufe ausgebildet ist.

7. Statorgehäuse (16) nach den Ansprüchen 4 und 5 oder 4, 5 und 6, wobei für einen Winkel ϕ zwischen der Vorderkante (E) und der Hinterkante (T) die folgende Bedingung gilt: 0 < ϕ ≤ 60°.

8. Statorgehäuse (16) nach Anspruch 1, wobei
wobei für die mehreren Flüssigkeitsströmungsablenker (110) wenigstens eine der beiden folgenden Bedingungen gilt:
- ein Flüssigkeitsströmungsablenker (110) an der radial äußeren Wand (90) ist in einer Umfangsrichtung zwischen zwei benachbarten Flüssigkeitsströmungsablenkern (110) an der radial inneren Wand (92) angeordnet; und
- ein Flüssigkeitsströmungsablenker (110) an der radial inneren Wand (92) ist in einer Umfangsrichtung zwischen zwei benachbarten Flüssigkeitsströmungsablenkern (110) an der radial äußeren Wand (90) angeordnet.

9. Statorgehäuse (16) nach einem der vorhergehenden Ansprüche, wobei
ein axialer Abstand zwischen dem Einlass (106) und dem Auslass (108) entlang der Längsachse (L) weniger als 25% einer Länge des Statorgehäuses (16) entlang der Längsachse (L) beträgt.

10. Statorgehäuse (16) nach einem der vorhergehenden Ansprüche, wobei
der Auslass (108) in einer Umfangsrichtung der Längsachse (L) vom Einlass (106) beabstandet ist.

11. Statorgehäuse (16) nach einem der vorhergehenden Ansprüche, wobei
sich die Flüssigkeitskammer (86) in einer Umfangsrichtung der Längsachse (L) über weniger als 360° erstreckt.

12. Statorgehäuse (16) nach einem der vorhergehenden Ansprüche, ferner umfassend
den Stator (28), wobei der Stator (28) in der Statoröffnung (64) aufgenommen ist und die radial innere Wand (92) der Kühlflüssigkeitskammer (86) definiert.

13. Flüssigkeitsgekühlter elektrisch angetriebener Verdichter (10) einer Brennkraftmaschine, wobei der Verdichter (10) das Statorgehäuse (16) nach einem der vorhergehenden Ansprüche umfasst.

## Revendications

1. Carter de stator (16) pour un compresseur à entraînement électrique refroidi par fluide (10) d'un moteur à combustion interne, le carter de stator (16) ayant un axe longitudinal (L) et comprenant
une ouverture de stator (64) s'étendant le long de la l'axe (L) et conçue pour recevoir un stator (28) d'un moteur électrique (26) ; et
une chambre de fluide (86) ayant une entrée de fluide (106) et une sortie de fluide (108) et s'étendant dans une direction circonférentielle de l'axe longitudinal (L) autour de l'ouverture de stator (64), dans laquelle la chambre de fluide (86) est délimitée par une paroi radialement extérieure (90) et une paroi radialement intérieure (92) par rapport à l'axe longitudinal (L),
dans lequel de multiples déflecteurs de flux de fluide (110) sont disposés dans une région entre la paroi radialement extérieure (90) et la paroi radialement intérieure (92) et espacés dans une direction circonférentielle de l'axe longitudinal (L) et conçus pour dévier au moins une partie d'un flux de fluide de refroidissement loin d'un chemin le plus court entre l'entrée (106) et la sortie (108), **caractérisé en ce qu'**un ou plusieurs des déflecteurs de flux de fluide font saillie de la paroi radialement extérieure et un ou plusieurs des déflecteurs de flux de fluide font saillie de la paroi radialement intérieure.

2. Carter de stator (16) selon la revendication 1, dans lequel
les déflecteurs de flux de fluide (110) ont une hauteur croissante dans une direction du flux de fluide de l'entrée (106) vers la sortie (108).

3. Carter de stator (16) selon l'une quelconque des revendications précédentes, dans lequel
les déflecteurs de flux de fluide (110) sont conçus pour conférer une composante de vitesse (A) à au moins une partie du flux de fluide de refroidissement, dans lequel la composante de vitesse (A) s'étend le long de l'axe longitudinal (L).

4. Carter de stator (16) selon l'une quelconque des revendications précédentes, dans lequel
les déflecteurs de flux de fluide (110) ont une surface d'attaque avec un bord d'attaque (E), dans lequel le bord d'attaque (E) s'étend obliquement par rapport à au moins l'un de l'axe longitudinal (L) et de la direction circonférentielle de l'axe longitudinal (L).

5. Carter de stator (16) selon l'une quelconque des revendications précédentes, dans lequel
les déflecteurs de flux de fluide (110) ont un bord de fuite (T) qui s'étend parallèlement à l'axe longitudinal (L).

6. Carter de stator (16) selon la revendication 5, dans lequel le bord de fuite (T) est conçu comme une marche.

7. Carter de stator (16) selon les revendications 4 et 5 ou 4, 5 et 6, dans lequel
pour un angle ϕ entre le bord d'attaque (E) et le bord de fuite (T), la condition suivante est remplie : 0 < ϕ ≤ 60 °.

8. Carter de stator (16) selon la revendication 1, dans lequel
pour les multiples déflecteurs de flux de fluide (110) au moins l'une des deux conditions suivantes est remplie :
- un déflecteur de flux de fluide (110) sur la paroi radialement extérieure (90) est situé dans une direction circonférentielle entre deux déflecteurs de flux de fluide adjacents (110) sur la paroi radialement intérieure (92) ; et
- un déflecteur de flux de fluide (110) sur la paroi radialement intérieure (92) est situé dans une direction circonférentielle entre deux déflecteurs de flux de fluide adjacents (110) sur la paroi radialement extérieure (90).

9. Carter de stator (16) selon l'une quelconque des revendications précédentes, dans lequel
une distance axiale entre l'entrée (106) et la sortie (108) le long de l'axe longitudinal (L) est inférieure à 25 % d'une longueur du carter de stator (16) le long de l'axe longitudinal (L).

10. Carter de stator (16) selon l'une quelconque des revendications précédentes, dans lequel
la sortie (108) est espacée de l'entrée (106) dans une direction circonférentielle de l'axe longitudinal (L).

11. Carter de stator (16) selon l'une quelconque des revendications précédentes, dans lequel
la chambre à fluide (86) s'étend dans une direction circonférentielle de l'axe longitudinal (L) sur moins de 360 °.

12. Carter de stator (16) selon l'une quelconque des revendications précédentes, comprenant en outre
le stator (28), dans lequel le stator (28) est reçu dans l'ouverture de stator (64) et définit la paroi radialement intérieure (92) de la chambre de fluide de refroidissement (86).

13. Compresseur entraîné électriquement refroidi par fluide (10) d'un moteur à combustion interne, le compresseur (10) comprenant le carter de stator (16) selon l'une quelconque des revendications précédentes.
